# EUROPÄISCHE PATENTANMELDUNG

(11) **EP 2 067 668 A1**
(43) Veröffentlichungstag der Anmeldung: **10.06.2009**
(21) Anmeldenummer: 08105563.4
(22) Anmeldetag: 13.10.2008
(51) Int. Cl.: B60R 21/0132, B60R 16/023, B60W 50/02

(54) **Verfahren und Vorrichtung zur Plausibilisierung einer Auswertung von sicherheitsrelevanten Signalen für ein Kraftfahrzeug**

(30) Priorität: 03.12.2007 DE 102007058071
(71) Anmelder: Robert Bosch GmbH, 70442 Stuttgart (DE)
(72) Erfinder: Willig, Rainer, 71732 Tamm (DE); Frese, Volker, 71701 Schwieberdingen (DE)

(57) **Zusammenfassung**

Es wird ein Verfahren und eine Vorrichtung zur Plausibilisierung einer Auswertung von sicherheitsrelevanten Signalen für ein Kraftfahrzeug durch Steuergeräte (31,32) vorgeschlagen. Dabei wird die Plausibilisierungsberechnung auf einem anderen Steuergerät (32) durchgeführt, als die Auswertung (31).

## Beschreibung

### Stand der Technik

Die Erfindung geht aus von einem Verfahren und einer Vorrichtung zur Plausibilisierung einer Auswertung von sicherheitsrelevanten Signalen für ein Kraftfahrzeug nach der Gattung der unabhängigen Patentansprüche.

Aus der WO 2006/106025 A1 ist ein Verfahren zur Plausibilisierung von Sensorsignalen in einem Fahrzeugsystem bekannt, bei dem Fehler der Sensorsignale mittels Plausibilisierung im Sensorsteuergerät oder externen Steuergeräten durchgeführt wird.

Aus der DE 10 2004 051 274 A1 sind Verfahren und Vorrichtungen zum Anpassen einer Überwachungseinrichtung eines Steuergerätes für ein Rückhaltesystem eines Kraftfahrzeuges bekannt, bei dem es darum geht, das Fehlverhalten des Mikrocontrollers im Steuergerät eines Rückhaltesystems durch ein hardwaretechnisches Plausibilisierungskonzept zu erkennen.

### Offenbarung der Erfindung

Das erfindungsgemäße Verfahren bzw. die erfindungsgemäße Vorrichtung mit den Merkmalen des unabhängigen Anspruchs haben den Vorteil, dass durch die Auslagerung der Plausibilisierungsfunktion in ein anderes Steuergerät, eine günstigere Ressourcenverteilung erreicht werden kann und beispielsweise der Hardwarebestandteil für die Plausibilisierung, z.B. Chipfläche, eingespart werden kann.

Weiterhin ist eine flexiblere Ressourcenaufteilung möglich, beispielsweise kann je nach Rechenleistung der Plausibilisierungseinheit ein aufwändigeres Verfahren für die Plausibilisierung, als auf dem Auswertesteuergerät möglich oder wünschenswert, durchgeführt werden.

Generell ist eine Sicherheitserhöhung zu erwarten, da die Signalwirkungskette des Auswertepfades auf einem längerem Abschnitt überwacht bzw. plausibilisiert wird, da die Plausibilisierungsberechnung von einem anderen Steuergerät durchgeführt wird. Insbesondere wird diese Robustheit dadurch erhöht, dass durch die Auslagerung ebenfalls weitere Datenverbindungen mit in die Plausibilisierung einbezogen werden, insbesondere die internen Datenverbindungen des Auswertesteuergeräts.

Durch die in den abhängigen Ansprüchen aufgeführten Maßnahmen sind vorteilhafte Weiterbildungen und Verbesserungen der in den unabhängigen Ansprüchen angegebenen Verfahren und Vorrichtungen möglich.

Vorteilhaft ist die Durchführung der Plausibilisierungsberechnung im Sensorsteuergerät, da dieses weitere Daten liefern kann, die für die Plausibilisierungsberechnung nützlich sind, in der Auswerteberechnung des Auswertesteuergeräts aber nicht unbedingt notwendig sind und daher nicht an dieses übertragen werden. Des Weiteren erhöht sich die Anzahl der (hardwaremäßig) vorhandenen Datenverbindungen in diesem Fall in der Regel nicht, da das Sensorsteuergerät ohnehin Daten an das Auswertesteuergerät liefert.

Abhängig von der Ausgestaltung der Datenübertragung kann die Plausibilisierungsinformation vorteilhafterweise in den Botschaften, über die die Daten versendet werden, mitversendet werden, beispielsweise über zusätzliche Bits, oder auch als separate Botschaft.

Vorteilhaft ist, dass eine üblicherweise verwendete Plausibilisierungseinheit, beispielsweise ein zweiter Prozessor oder eine spezielle Hardwareeinheit, z.B. ein spezieller Baustein, im Auswertesteuergerät nun dadurch ersetzt werden kann, dass die Plausibilisierung in einem anderen Steuergerät, beispielsweise in einer dort günstiger zu realisierenden, oder ohnehin vorhanden Hardwareeinheit realisiert werden kann. Typischerweise kann die Realisierung durch Software auf einem bereits bestehenden Mikrocontroller erfolgen.

Vorteilhafterweise kann die Plausibilisierungsberechnung zeitlich etwas vor der Auswertung stattfinden. Da zum Zeitpunkt der Auswertung üblicherweise eine hohe Rechenlast für den Mikrocontroller des Auswertesteuergeräts vorliegt, kann die bereits vorhandene Plausibilisierungsinformation dazu genutzt werden, schneller das Auslösesignal zu generieren. Hierzu kann die Plausibilisierungsinformation beispielsweise über einen Hardwarepfad - d.h. ohne Eingriff von Software, wie beispielsweise in einem Microcontroller - am Mikrocontroller vorbeigeleitet werden, indem der Interfacebaustein die Plausibilisierungsinformation aufnimmt und von sonstigen für einen Mikrocontroller oder andere Elemente bestimmten Daten absondert und direkt an den Entscheider, oder Ausgangsinterface weiterleitet.

### Begriffserläuterungen

Als sicherheitsrelevantes System wird bezeichnet, was für die Sicherheit oder das Leben von Lebewesen, seien es Insassen oder andere, entscheidend sein kann. Dies kann Systeme betreffen, die speziell nur zu diesem Zweck vorgesehen sind, wie Rückhaltesysteme, wie z.B. das Auslösen eines Airbags oder auch Systeme, die originär einen anderen Zweck haben, wie z.B. eine Motorsteuerung. Das sicherheitsrelevante System kann auch nur ein Teil eines Gesamtsystems sein. Diese Sicherheitsrelevanz bedarf einer besonderen Absicherung, die einerseits durch die Auslegung als redundantes System oder einfacher durch eine Plausibilisierung sichergestellt werden kann.

Die Plausibilisierung, auch Plausibilitätskontrolle oder Plausibilitätsprüfung genannt, ist eine Methode, in deren Rahmen ein Wert oder allgemein ein Ergebnis überschlagsmäßig daraufhin überprüft wird, ob es überhaupt plausibel, also annehmbar, einleuchtend und nachvollziehbar sein kann, oder nicht. Während Redundanz bedeutet, dass das System oder die Berechnung wenigstens zweifach vorgehalten wird, um die Ergebnisse beider, auf Gleichheit und damit auf Korrektheit überprüfen zu können, wird bei der Plausibilisierung nicht zwangsläufig die Richtigkeit des Wertes oder Ergebnisses verifiziert, sondern es soll eine ggf. vorhandene offensichtliche Unrichtigkeit erkannt werden. Vorteil hiervon ist der geringere Systemaufwand gegenüber der redundanten Auslegung. Hingegen kann ein redundant ausgelegtes System sehr wohl auch zur Plausibilisierung herangezogen werden. Erfindungsgemäß ist ein redundantes System durch den Begriff "Plausibilisierung" ebenfalls mit eingeschlossen. Zu beachten ist bei der Auslegung von redundanten Systemen bzw. der Plausibilisierung von Systemen, welche Teile der Signalwirkungskette überwacht werden.

Die physikalischen Erscheinungsformen von Nachrichten werden als Signale bezeichnet. Im allgemeinen sind Signale zeitabhängige Größen, ändern ihren Betrag in Abhängigkeit von der Zeit. Elektrische Signale sind eine Untergruppe, welche sich auf die Darstellung von Nachrichten in Form von elektrischen Spannungen und elektrischen Strömen reduzieren. Der Begriff Nachricht steht hier gleichbedeutend mit Information, Botschaft, Daten.

Der Weg von der Erzeugung eines Signals bis zur Wirkung wird als Signalwirkungskette bezeichnet und beinhaltet auch mögliche Transformationen des Signals auf dem Weg zur Wirkung, beispielsweise eine Auswertung oder Berechnung, die mithilfe eines Signals durchgeführt wird. An der Signalwirkungskette können auch mehrere Signale oder Wirkungen, genauso wie verschiedene Pfade enthalten sein.

Ein Modul ist eine Komponente einer Software und/oder Hardware, bestehend aus einer Folge von Verarbeitungsschritten und Datenstrukturen. Inhalt eines Moduls ist häufig eine wiederkehrende Berechnung oder Bearbeitung von Daten, die mehrfach durchgeführt werden muss. Sie dient der Ausführung einer bestimmten abgeschlossenen Funktion, kann selber aber in der Realisierung isoliert auftreten oder auch integriert, beispielsweise als Hardwarebestandteil in einem Steuergerät oder als Softwaremodul in einem Prozessor.

Der Begriff Einheit wird vorliegend synonym mit dem Begriff Modul, bzw. Komponente verwendet.

Spezielle Ausführungsmerkmale in dieser Erfindung für Einheiten sind die Plausibilisierungseinheit, in der die Berechnung der Plausibilisierungsinformation durchgeführt wird, sowie die Auswerteeinheit, in der die Auswerteberechnung, das heißt in der Regel die Kernfunktionalität des sicherheitsrelevanten Systems, durchgeführt wird.

Als Steuergerät wird eine hardwaremäßig abgeschlossene Einheit bezeichnet, die selber aber verschiedene Funktionalitäten oder weitere Hardwarebestandteile oder wie oben genannt Einheiten enthalten kann. Die Steuergeräte sind üblicherweise über Datenverbindungen mit anderen Steuergeräten oder Sensoren oder anderen Hardwareeinheiten verbunden. Eine spezielle Ausprägung eines Steuergeräts ist beispielsweise ein Sensorsteuergerät, welches Sensoren beinhaltet, die physikalische Daten von Umgebungsbedingungen liefern. In diesem kann gleichzeitig eine Aufbereitung der Daten stattfinden und/oder auch andere Berechnungen, wie z.B. die erfindungsgemäß genannte, durchgeführt werden.

Eine Datenverbindung dient der Datenübertragung, wobei es unerheblich ist, über welches Medium diese geschieht. So können damit drahtlose (z.B. Bluetooth, WLAN, GSM, UMTS, GPRS) und drahtgebundene (z.B. RS232, Zweidraht, Mehrdraht, Ethernet, Flexray, MOST, CAN, Telefon, SPI, PSI 5, EIB) gemeint sein. Datenverbindungen können sowohl zwischen den Steuergeräten existieren, als auch innerhalb des Steuergeräts verschiedene Einheiten oder Interfaces miteinander verbinden. Datenverbindungen können genauso gut über Bussysteme realisiert sein, unabhängig von deren Topologie (wie z.B. Stern- oder Ringtopologien), Multiplexing (z.B. Zeit-, Frequenz oder Ortsmultiplex), der Anzahl der Teilnehmer, dem Adressierungsverfahren oder dem Mastering (z.B. Master-Slave).

Als Botschaft bezeichnet man eine Nachricht oder Mitteilung von einem Sender an einen Empfänger, ursprünglich im Sinne einer durch einen Boten überbrachten Nachricht. In der elektrotechnischen Realisierung mittels einer Datenübertragung wird eine Nachricht mittels einem oder mehrerer Datenpakete übertragen, die beispielsweise den Messwert eines Sensors als Nachricht beinhalten können.

Ausführungsbeispiele der Erfindung sind in der Zeichnung dargestellt und werden in der nachfolgenden Beschreibung näher erläutert.

Es zeigen:
Figur 1 ein Blockschaltbild eines Steuergeräts zur Auswertung nach dem Stand der Technik zur Illustration des vorteilhaften Potenzials,
Figur 2 ein Blockschaltbild eines beispielhaften Sensorsteuergeräts entsprechend des nebengeordneten Anspruchs,
Figur 3 ein Schaltbild der Anordnung der verschiedenen Einheiten.
Figur 4 eine schematische Darstellung des Verfahrensablaufs

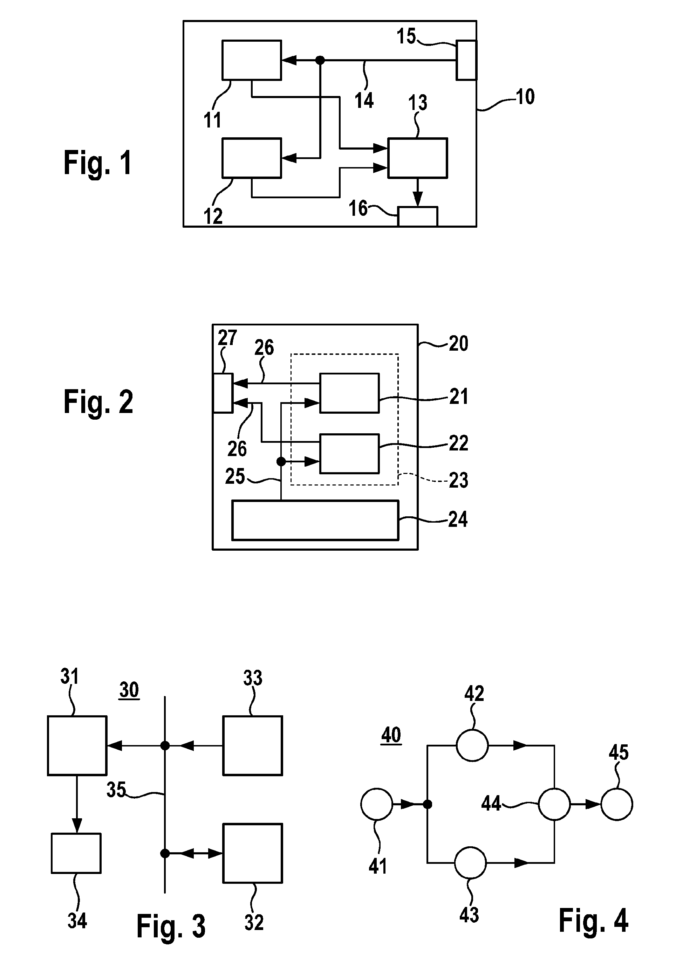

Figur 1 zeigt eine übliche Anordnung eines Auswertesteuergeräts inklusive Plausibilisierung, bei dem die notwendigen Daten, insbesondere die Sensordaten, über eine Schnittstelle 15 für die Eingangsdaten - Eingangsdaten können auch über mehrere Schnittstellen in das Steuergerät gelangen - über eine Datenverbindung 14 zur Auswerteeinheit 11 gelangen. Die Auswerteeinheit, die beispielsweise durch einen Mikrocontroller realisiert sein kann, auf der Softwareprogramme zur Ausführung kommen, ist für die originäre Funktionalität des sicherheitskritischen Systems verantwortlich.
Dies kann z.B. ein Personenrückhaltesystem sein, welches als Ausgangssignal die Zündung eines Airbags bewirken soll. Als Ausführungsbeispiel eines anderen sicherheitsrelevanten Systems kann man sich ein Motorsteuergerät vorstellen, wobei die Ausgangssignale in diesem Fall (unter anderem) dem Vortrieb des Fahrzeugs dienen.

Da eine ungewollte Sicherheitsreaktion sicherheitsrelevanter Systeme nicht gewünscht ist, wird eine Plausibilisierung in der Plausibilisierungseinheit 12 durchgeführt, die in einem Entscheider 13 mit dem Auswerteergebnis zusammengeführt wird. Hier wird geprüft, ob das Auswerteergebnis gültig ist, was für das Beispiel des Airbags bedeutet, dass dieser ausgelöst wird, sofern das Ergebnis der Auswertung dementsprechend lautet. Für das Beispiel des Motorsteuergeräts bedeutet das, zu hinterfragen, ob die berechneten Vortriebsparameter überhaupt gewünscht bzw. korrekt berechnet sind, um in jedem Fall einen unerwünschten Vortrieb zu vermeiden.

Das Ergebnis der Entscheidung gelangt zu einer Schnittstelle für das Ausgangssignal 16, welches ebenfalls wieder wie die Eingangsschnittstelle in Form mehrerer hardware- oder softwarerealisierter Schnittstellen existieren kann.

Verfahrenstechnisch bietet diese Vorrichtung den Vorteil, dass die Auswerteeinheit, üblicherweise der Mikrocontroller, aber auch andere Teile der Signalwirkungskette, durch die Plausibilisierung gegen Fehlfunktion abgesichert ist. Die Eingangsdaten für die Plausibilisierungseinheit sind hierbei ähnlich oder identisch wie die für die Auswerteeinheit und können über die gleiche Datenverbindung bekannt gemacht werden. Die Ausgangssignale der Auswerteeinheit 11 und Plausibilisierungseinheit 12 können alternativ auch über einen gemeinsamen Bus oder sogar über den gleichen Bus wie die Eingangssignale, also 14, transportiert werden. Im Falle eines Airbagsteuergeräts ist es jedoch üblich, zwischen der Plausibilisierungseinheit und dem Entscheider eine einfache separate Logikleitung vorzuhalten, um hier von der eingangsseitigen Datenverbindung unabhängig zu sein.

Die erfindungsgemäße Auslagerung der Plausibilisierungseinheit 12 aus dem Auswertesteuergerät 10 heraus bewirkt eine Vereinfachung der Anordnung und damit eine Kostenvergünstigung des Steuergeräts. Über einen Eingang wie oder gleich 15 kann die Plausibilisierungsinformation direkt zum Entscheider 13 gelangen, es entfällt hierbei die Datenübertragung über die Verbindung 14. Wird eine hardwaretechnisch gemeinsame Schnittstelle 15 für die Daten sowie für die Plausibilisierungsinformation verwendet, so muss am Interface die Plausibilisierungsinformation separiert und dem Entscheider zugeführt werden, idealer Weise über eine eigene Datenverbindung. Dies hat den o.g. Vorteil, dass auch Übertragungsfehler über die Datenverbindung 14, die gleichermaßen die Auswerteeinheit wie die Plausibilisierungseinheit in die Irre führen könnten, abgefangen werden.

Figur 2 zeigt ein Sensorsteuergerät 20 entsprechend dem nebengeordneten Anspruch. In dem Ausführungsbeispiel sind ein oder mehrere Sensoren 24 verbunden mit der zugehörigen Berechnungseinheit 21, die beispielsweise Aufgaben übernehmen kann wie Rohwertfilterung der Sensorsignale oder Datenaufbereitung, und als originäre Aufgabe über Datenverbindungen 26 diese Daten an einem Interface 27 bereitstellt. Erfindungsgemäß kann eine Plausibilisierungseinheit 22 zum Einsatz kommen, die beispielsweise das wenigstens eine Sensorsignal 24 im Sinne der Funktion des sicherheitskritischen Systems prüft und das Ergebnis über eine Datenverbindung 26 an ein Interface 27 weiterleitet. Es ist hierbei unerheblich, ob die Datenverbindungen und Interfaces gemeinsam oder getrennt verwendet werden und zur Ausführung kommen.

Ebenfalls denkbar ist, dass steuergeräteexterne Daten von beispielsweise externen Datensensoren auch über eine Schnittstelle in die Plausibilisierungseinheit 22 gelangen und dort zu Plausibilisierungszwecken herangezogen werden. Zweckmäßigerweise können die originäre Berechnungseinheit 21 und die Plausibilisierungseinheit 22 ggf. auch andere Einheiten zu einer Einheit zusammengefasst werden, beispielsweise einem Mikrocontroller mit verschiedenen Softwarebestandteilen. In der Zeichnung sind die Eingangsdatenverbindungen 25 und Ausgangsdatenverbindungen 26 getrennt dargestellt, erfindungsgemäß können die Datenverbindungen aber beliebig strukturiert sein.

In Figur 3 sind die Anordnungen der verschiedenen Komponenten dargestellt. Die Auswerteeinheit befindet sich üblicherweise in einem Auswertesteuergerät 31, welches schlussendlich das sicherheitsrelevante System 34 ansteuert. Die Plausibilisierungseinheit ist erfindungsgemäß in ein Steuergerät 32 gewandert, welches als exklusives Steuergerät ausgebildet sein kann, alternativ kann die Plausibilisierungseinheit Bestandteil eines anderen Steuergeräts sein, z.B. einem beispielhaft dargestellten Steuergerät 33, einer Datenbereitstellungseinheit, z.B. dem in Figur 2 genannten Sensorsteuergerät.

Die Steuergeräte untereinander kommunizieren wie üblich über eine oder mehrere Datenverbindungen 35. Somit kann erfindungsgemäß die Plausibilisierungseinheit an den Ort im Gesamtsystem verlagert werden, der optimal erscheint, beispielsweise an dem Ort, an dem Rechenleistung, insbesondere im entscheidenden Moment, wie beispielsweise einem Crashfall, zur Verfügung steht. Ein weiterer genannter Vorteil wird in dieser Anordnung deutlich: Die Plausibilisierungseinheit kann so platziert bzw. mit Daten versorgt werden, dass auch Daten herangezogen werden können, die innerhalb der Auswerteeinheit oder des Auswertesteuergeräts nicht vorliegen, aber eine geeigneter bzw. sicherere oder auch frühere Plausibilisierung ermöglichen. Denkbar sind hier z.B. Signale des ESP-Steuergerätes, die üblicherweise nicht zur Airbag-Auslösung verwendet werden, jedoch trotzdem für die Fahrsituation relevant sein können und die Plausibilisierungsinformation so schneller, oder gar vorab und/oder genauer erlangen lassen.

Figur 4 zeigt den Verfahrensablauf 40, in welchem die (Sensor)signale 41 einerseits in die Auswerteeinheit 42 auf einem Steuergerät und andererseits in die Plausibilisierungseinheit 43 auf einem anderen Steuergerät gelangen. Die Ergebnisse beider werden im Entscheider 44 zusammengeführt, der ggf. die Reaktion 45 auslöst.

## Patentansprüche

1. Verfahren zur Plausibilisierung einer Auswertung (42) von sicherheitsrelevanten Signalen für ein Kraftfahrzeug durch Steuergeräte (31, 32), **dadurch gekennzeichnet, dass** wenigstens eine der Plausibilisierungsberechnungen (43) auf einem anderen Steuergerät durchgeführt wird, als die Auswertung (42).

2. Verfahren nach Anspruch 1, **dadurch gekennzeichnet, dass** wenigstens eine der Plausibilisierungen (43) auf wenigstens einem Sensorsteuergerät (20) durchgeführt werden.

3. Verfahren nach einem der vorherigen Ansprüche, **dadurch gekennzeichnet, dass** die Plausibilisierungsinformation über die Datenübertragungsschnittstelle (15, 27, 35) mittels wenigstens einem zusätzlichen Bit in wenigstens einer Botschaft oder in einer separaten Botschaft übertragen wird.

4. Vorrichtung zur Plausibilisierung einer Auswertung von sicherheitsrelevanten Signalen für ein Kraftfahrzeug durch Steuergeräte (10, 20), **dadurch gekennzeichnet, dass** wenigstens eine Plausibilisierungseinheit (22) in wenigstens einem ersten Steuergerät (32) vorgesehen ist und eine Auswerteeinheit (31) zur Durchführung der Auswertung in einem zweiten Steuergerät.

5. Vorrichtung nach Anspruch 4, **dadurch gekennzeichnet, dass** die Auswerteeinheit (31) die Plausibilitätsinformation mittels einem Hardwarepfad weiterverarbeitet.

6. Vorrichtung nach Anspruch 4 und 5, **dadurch gekennzeichnet, dass** wenigstens ein Steuergerät (33) Daten an wenigstens ein weiteres Steuergerät (31) liefert, welches für eine Auswertung zur Auslösung eines sicherheitsrelevanten Systems (34) vorgesehen ist.

7. Vorrichtung zur Bereitstellung von Sensordaten (24) in einem sicherheitsrelevanten System mit gleichzeitiger Plausibilisierung, **dadurch gekennzeichnet, dass** die Plausibilisierungseinheit (22) im Sensorsteuergerät (20), bzw. in der Sensormesseinheit selbst vorgesehen ist.

8. Vorrichtung nach Anspruch 7, **dadurch gekennzeichnet, dass** die Daten (21) und die Plausibilisierungsinformation (22) über die selbe Hardwareschnittstelle (27) ausgebbar sind.

9. Vorrichtung nach Anspruch 4 und 7, **dadurch gekennzeichnet, dass** die Plausibilisierungseinheit (22) mit Hilfe eines Prozessors, bzw. eines Microcontrollers (23) realisierbar ist.

10. Vorrichtung nach Anspruch 4 und 7, **dadurch gekennzeichnet, dass** die Plausibilisierungseinheit Bestandteil einer Hardwareeinheit (20) ist, die auch andere Aufgaben (21) übernimmt.
